# EUROPÄISCHE PATENTSCHRIFT

(11) **EP 0 827 518 B1**
(45) Veröffentlichungstag und Bekanntmachung des Hinweises auf die Patenterteilung: **04.08.1999**
(21) Anmeldenummer: 96919598.1
(22) Anmeldetag: 22.05.1996
(51) Int. Cl.: C08G 63/82

(54) **VERFAHREN ZUR HERSTELLUNG VON POLYESTERN UNTER VERWENDUNG VON TITANHALTIGEN KATALYSATOR-INHIBITOR-KOMBINATIONEN**
PROCESS FOR PRODUCING POLYESTERS USING TITANIUM-CONTAINING CATALYST-INHIBITOR COMBINATIONS
PROCEDE DE PRODUCTION DE POLYESTERS A L'AIDE DE COMBINAISONS CATALYSEUR-INHIBITEUR CONTENANT DU TITANE

(30) Priorität: 23.05.1995 DE 19518943
(43) Veröffentlichungstag der Anmeldung: 11.03.1998
(73) Patentinhaber: KARL FISCHER INDUSTRIEANLAGEN GMBH, D-13509 Berlin (DE)
(72) Erfinder: HAGEN, Rainer, D-13465 Berlin (DE); SCHAAF, Eckehart, D-14513 Teltow (DE); ZIMMERMANN, Heinz, D-14532 Kleinmachnow (DE)
(74) Vertreter: Pfenning, Meinig & Partner
(86) Internationale Anmeldenummer: DE9600932
(87) Internationale Veröffentlichungsnummer: WO9637534

(56) Entgegenhaltungen:
- WO-A-94/14870
- DATABASE WPI Week 8018 Derwent Publications Ltd., London, GB; AN 80-31717c XP002013794 & JP,A,55 038 838 (NIPPON ESTER KK) , 19.März 1980
- RESEARCH DISCLOSURE, Bd. 167, Nr. 010, März 1978, HAVANT GB, Seite 4 XP000602156 ANONYMOUSLY: "Titanium catalyst for polyester synthesis"
- DATABASE WPI Week 7944 Derwent Publications Ltd., London, GB; AN 79-79669b XP002013795 & JP,A,54 120 699 (TOYOBO KK) , 19.September 1979
- DATABASE WPI Week 7624 Derwent Publications Ltd., London, GB; AN 76-44852x XP002013796 & JP,A,51 049 295 (TEIJIN KK) , 29.April 1976

## Beschreibung

Die Erfindung betrifft ein Verfahren zur Herstellung von Polyethylenterephthalat und Mischpolyestern aus Terephthalsäure und Ethylenglykol und anderen mehrfunktionellen Alkoholen und mehrbasischen Carbonsäuren unter Verwendung von Titankatalysatoren, Kobaltverbindungen und phosphorhaltigen Verbindungen als Inhibitoren.

Die technische Herstellung von Polyethylenterephthalat und dessen Mischpolyestern erfolgt üblicherweise in zwei Stufen. In der ersten Stufe werden die mehrbasischen Carbonsäuren, z.B. Terephthalsäure, oder deren Alkylester mit Ethylenglykol oder einer Mischung aus verschiedenen, mehrfunktionellen Alkoholen zu einem niedermolekularen Vorkondensat umgesetzt, das in einer zweiten Stufe zu hochmolekularem Polyethylenterephthalat oder einem entsprechenden Copolyester polykondensiert wird. Um technisch praktikable Umsatzzeiten und Polyester mit hohem Molekulargewicht und guter Produktqualität zu erreichen, bedürfen beide Stufen der Polyesterherstellung einer katalytischen Beschleunigung. Die Veresterung der Terephthalsäure mit Ethylenglykol wird bereits durch die freigesetzten Protonen aus der Terephthalsäure katalysiert und kann durch bestimmte Verbindungen beschleunigt oder in ihrem Verlauf, z.B. im Hinblick auf die Bildung von Nebenprodukten, wie Diethylenglykol, beeinflußt werden. Zur Beschleunigung der Umesterung und Polykondensation müssen spezielle Katalysatoren zugesetzt werden. Als Umesterungs- und Polykondensationskatalysatoren wurden zahlreiche Verbindungen vorgeschlagen. Bevorzugte Verwendung finden Metallverbindungen, die z.B. in H. Ludewig "Polyesterfasern" (Akademie-Verlag Berlin 1975) beschrieben sind.

Die Katalysatoren für die Polyesterherstellung katalysieren jedoch nicht nur die Aufbaureaktion, sondern beschleunigen - in unterschiedlichem Maße - Abbaureaktionen, die Wärmebeständigkeit, die Bildung von Nebenprodukten, die Farbe und das Verarbeitungsverhalten des Endprodukts. Zur Verbesserung des Produktionsablaufs und der Produkteigenschaften werden deshalb auf den jeweiligen Verwendungszweck abgestimmte Katalysatoren und Katalysatorkombinationen, sowie Katalysatorinhibitoren und Stabilisatoren verwendet. Als Umesterungskatalysatoren werden bevorzugt Salze organischer Säuren mit zweiwertigen Metallen (z.B. Mangan-, Zink-, Kobalt- oder Calciumacetat) benutzt, die an sich auch die Polykondensationsreaktion katalysieren. Wegen Ihrer katalytischen Wirkung auf Abbaureaktionen des PET müssen die Metallkatalysatoren vor Beginn der Polykondensation durch Umsetzung mit bestimmten Katalysatorinhibitoren unwirksam gemacht werden. Als Inhibitoren werden vorrangig phosphorhaltige Verbindungen, wie phosphorige Säuren oder Phosphorsäure und deren Ester eingesetzt. Als Polykondensationskatalysatoren werden bevorzugt Antimon-, Germanium- und Titanverbindungen verwendet. Antimonverbindungen haben eine breite Anwendung bei der Herstellung von PET für verschiedene Anwendungsgebiete gefunden, weil sie die Polykondensationsreaktion relativ gut katalysieren und Abbaureaktionen und die Bildung von Nebenprodukten wenig fördern. Nachteile der Verwendung von Antimonverbindungen bestehen in deren Toxizität und einem stets zu beobachtenden Graustich der Polykondensate durch elementares Antimon. Die Toxizität der Antimonverbindungen und speziell des Antimontrioxids, das bevorzugt als Polykondensationskatalysator verwendet wird, kommt einerseits im Herstellungsprozeß beim Ansetzen und Hantieren der Katalysatorlösungen nachteilig zur Geltung und führt andererseits bei der Verarbeitung, dem Gebrauch und der Entsorgung der Endprodukte zu Umweltbelastungen, weil das Antimon durch Wasser zum Teil ausgewaschen wird und ins Abwasser gelangt oder bei der Verbrennung der Polyester die Luft belastet.

In elektrischen und elektronischen Bauteilen aus PET, die längere Zeit unter hohen Temperaturen stehen, neigt Antimon zum Migrieren und bildet Beläge auf der Oberfläche, die zu Kontaktproblemen führen können.

Der Farbton germaniumhaltiger Polyester ist zwar heller als der, der antimonhaltigen Produkte, durch Germanium wird jedoch die Bildung von Nebenprodukten, insbesondere von Diethylenglykol, gefördert und der thermooxidative Abbau katalysiert.

Titanverbindungen katalysieren in der ersten Stufe der Polyesterherstellung sowohl die Umesterung als auch die Veresterung und führen zu einer deutlichen Erhöhung der Polykondensationsgeschwindigkeit, die Polykondensate weisen jedoch eine erhebliche Gelbfärbung auf.

Aus der GB PS 588 833 und 769 220 ist bekannt, daß drei- und fünfwertige Phophorverbindungen als Inhibitoren gegen die Verfärbung von Polyestern eingesetzt werden können. In der DE PS 26 26 827 wird Metallphosphorsäure zur Stabilisierung titanhaltiger Polyester vorgeschlagen. In der DE OS 24 34 213 wird gezeigt, daß die Verfärbung von titanhaltigen Polyestern durch den Zusatz von Phosphorsäure oder Phosphatestern erfolgreich zurückgedrängt werden kann. Andererseits führt der Zusatz der Phosphorsäure und der Phosphatester auch zu einer Inhibierung der katalytischen Aktivität des Titans bei der Polykondensation des Polyesters. In der DE OS 24 34 213 wird deshalb vorgeschlagen, die Veresterung der Terephthalsäure mit Ethylenglykol in Gegenwart einer im Reaktionsgemisch löslichen Titanverbindung durchzuführen, die Titanverbindung nach Abschluß der Veresterung durch Umsetzung mit Phosphorsäure oder einem Phosphatester zu desaktivieren und die anschließende Polykondensation durch Zusatz einer löslichen Antimon- oder Germaniumverbindung zu beschleunigen. Das führt jeoch wiederum zu den bekannten Nachteilen bei der Verwendung von Antimon- und Germaniumverbindungen.

Der vorliegenden Erfindung liegt deshalb die Aufgabe zugrunde, Umweltbelastungen durch Freisetzung von Antimon durch den Ersatz des Antimontrioxids als Polykondensationskatalysator bei der Polyestersynthese durch Verwendung nichttoxischer Katalysatoren zu beseitigen und farbhelle Polyester mit geringem Gehalt an Nebenprodukten und Acetaldehyd und hoher thermischer und thermooxidativer Beständigkeit herzustellen. Die Polyester sollen gleichzeitig einen besonders niedrigen Gehalt an Metallverbindungen aufweisen.

Die Aufgabe wird verfahrensmäßig durch die kennzeichnenden Merkmale des Anspruchs 1 in Bezug auf die Polyester durch die Merkmale des Anspruchs 6 gelöst. Die Unteransprüche zeigen vorteilhafte Weiterbildungen auf.

Erfindungsgemäß besteht das Verfahren zur Herstellung von Polyestern und Mischpolyestern aus der Umsetzung von wenigstens einer Dicarbonsäure, z.B. Terephthalsäure, die teilweise durch andere Dicarbonsäuren oder höherwertige Polycarbonsäuren ersetzt sein kann, mit wenigstens einem Alkandiol, z.B.Ethylenglykol, das auch noch andere zwei- und mehrwertige Alkanpolyole enthalten kann, in Gegenwart eines titanhaltigen Katalysators wie Titantetrabutylat in einer Menge von 0,005 bis 0,05 mmol/mol Dicarbonsäure und anschließender Zugabe eines phosphorhaltigen Inhibitors in einer Menge von 0,004 bis 0,4 mmol Phosphor/mol Polycarbonsäure. Durch die Zugabe der Phophorverbindung, erfindungsgemäß insbesondere Phosphorsäure, phosphorige Säure, Phosphonsäure und deren Ester, wird die katalytische Aktivität des Titans teilweise inhibiert, wie in der DE OS 24 34 213 gezeigt wird. Überraschenderweise wurde nun aber gefunden, daß die katalytische Aktivität des Titans als Polykondensationskatalysator erhalten bleibt oder wieder hergestellt wird, wenn gleichzeitig mit oder nach der Zugabe des phosphorhaltigen Inhibitors ein Kobaltsalz, wie Kobaltacetat, in einer Menge von 0,5 bis 5 mol Kobalt/mol Phosphor, bevorzugt 0,7 bis 2 mol/mol, zugegeben wird und daß dabei farbhelle Polyester mit einem geringen Gehalt an Nebenprodukten und einer niedrigen Neubildungsrate von Acetaldehyd erhalten werden.

Katalysator-Inhibitor-Kombinationen auf der Basis von Kobalt-, Titan- und Phosphorverbindungen gehören insofern zum bekannten Stand der Technik, als Kobaltverbindungen als Katalysator für die Umesterung von Terephthalsäuredimethylester mit Ethylenglykol verwendet, anschließend durch Zusatz von Phosphorverbindungen inhibiert werden und die Polykondensation in Gegenwart bekannter Polykondensationskatalysatoren wie Antimon, Titan oder Germanium durchgeführt wird. Derartige Kombinationen sind z.B. in der US PS 3,907,754 beschrieben. Im vorliegenden Fall handelt es sich jedoch um die Herstellung eines Polyestervorkondensates durch Veresterung von Terephthalsäure bzw. einer Mischung aus Terephthalsäure mit anderen Di- und Polycarbonsäuren, und Ethylenglykol, das auch noch andere Alkandiole oder höherwertige Polyole enthalten kann, bei der Kobaltverbindungen katalytisch nicht aktiv sind und durch Umsetzung mit der im Überschuß vorhandenen Terephthalsäure in schwerlösliches Kobaltterephthalat überführt würden.

Überraschend ist dabei auch, daß Titankonzentrationen von z.B. 0,02 mmol Titan/mol Dicarbonsäure eine katalytische Aktivität aufweisen, die vergleichbar ist mit der von etwa 0,3 mmol Antimon/mol Dicarbonsäure, einer Konzentation, die bei der großtechnischen Herstellung von PET üblich ist. Damit kann die Katalysatordosierung auf etwa den vierzigsten Teil (bezogen auf die Masse der Metalle) gesenkt werden.

Die Erfindung öffnet den Weg zu Polyestern mit besonders niedrigem Gehalt an Schwermetallen. Abgesehen davon, daß ein niedriger Katalysatorverbrauch bei der Herstellung von Polyester Kostenvorteile bringt, sind niedrige Metallionenkonzentrationen auch von Bedeutung für die Eigenschaften von aus diesen Polyestern hergestellten elektrischen und elektronischen Bauteilen. Niedrige Konzentrationen an Metallionen senken die Dielektrizitätskonstante, erhöhen die elektrische Durchschlagsfestigkeit und den spezifischen Durchgangswiderstand und erweitern damit die Einsatzmöglichkeiten der Polyester im Bereich der Elektrotechnik und Elektronik.

Der niedrige Schwermetallgehalt führt zu einer höheren Oxidationsstabilität des Polymers im Vergleich zu Polymeren, die mit ca. 0,3 mmol Antimon/mol Dicarbonsäure hergestellt wurden. Das betrifft insbesondere die Herstellung von schnellkristallisierendem Polyethylenterephthalat, wo die zugesetzten Kristallisierungsbeschleuniger die oxidative Schädigung fördern. Solche schnellkristallisierenden Produkte können z.B. auch aus Dimethylterephthalat (DMT) hergestellt werden, wenn man die Umesterung durch Zusatz von z.B. 0,02 mmol Titantetrabutylat/mol DMT in Verbindung mit 6 bis 10 mmol Natriumacetat/mol DMT und 0,01 bis 0,02 mmol Kobaltacetat/mol DMT katalysiert und die anschließende Polykondensation ebenfalls in Gegenwart dieser Zusätze durchführt.

Die Veresterung wird erfindungsgemäß in Gegenwart einer Titanverbindung bis zu einem Umsatz von über 95 %, bevorzugt über 98 %, gemessen am Grad der Wasserabspaltung, bei Temperaturen bis zu 270°C bei einem geringen Überdruck bis zu etwa 3 bar abs. oder bei Normaldruck durchgeführt. Der phosphorhaltige Inhibitor wird in Form einer glykolischen Lösung oder Suspension oder in anderer geeigneter Form vor, während oder nach der Veresterung zugegeben und homogen vermischt. Nach Abschluß der Veresterung und nach Zugabe des Inhibitors wird eine Kobaltverbindung, z.B. Kobaltacetat, gelöst in Ethylenglykol in die Schmelze eingemischt, und die Polykondensation in bekannter Weise bei allmählich bis auf etwa 1 mbar sinkendem Druck bis zu einer intrinsischen Viskosität von 0,6 dl/g durchgeführt. Die Kobaltverbindung kann auch nach einer weiteren Vervollständigung der Veresterung, nach dem Glykolabtrieb oder nach Beginn der Vorpolykondensation zugegeben werden. Zur weiteren Erhöhung der intrinsischen Viskosität kann der erfindungsgemäß hergestellte Polyester in bekannter Weise einer Festphasennachkondensation unterworfen werden.

Die Erfindung wird nachträglich anhand von Beispielen näher erläutert:

### 1. Beispiel

690 g Terephthalsäure (TPA) werden mit 3190 g Ethylenglykol unter Zugabe von 0,02 mmol Titantetrabutylat/mol TPA bei Temperaturen von 250 bis auf 270°C ansteigender Temperatur und einem Druck von 1 bar verestert. Das entstehende Wasser wird abdestilliert bis die theoretische Menge erreicht ist.

Das Veresterungsprodukt wird erfindungsgemäß mit den in Tabelle 1 angegebenen Stabilisatoren und Cobaltacetat vermischt und bei langsam zunehmendem Vakuum bei 280°C 150 min polykondensiert. Die Polyester werden durch Bestimmung der intrinsischen Viskosität (IV) in Phenol/1.2-Dichlorbenzol (1:1) bei 20°C, des Carboxylendgruppengehalts und durch die Farbwerte des CIE-L/a/b-Systems charakterisiert, wobei positive b-Werte einen Gelbstich anzeigen, negative b-Werte einen Blaustich.

### Tabelle

Polykondensation des Veresterungsprodukts mit einem Gehalt von 0,02 mmol Titantetrabutylat/mol Terephthalsäure unter Zusatz von verschiedenen Stabilisatoren und Kobaltacetat, Polykondensationszeit 150 min bei 280°C, Endvakuum 0,1 mbar.

| Nr. | Stabilisator (mmol/mol TPA) | Kobalt (mmol/ mol TPA) | IV (dl/g) | COOH (mmol /kg) | Farbe (CIE L/a/b) b-Wert |
|---|---|---|---|---|---|
| 1.3 | 0,1 TNPP | 0,1 | 0,66 | 16,1 | 5,8 |
| 1.4 | 0,1 H₃PO₄ | 0,1 | 0,65 | 13,0 | 5,0 |
| 1.5 | 0,1 BPDP | 0,1 | 0,73 | 22,1 | 5,6 |
| 1.6 | 0,1 Poly-PPS | 0,1 | | | 5,4 |
| 1.7 | 0,1 TPPat | 0,1 | 0,68 | 25,5 | 6,3 |
| TNPP: Trisnonylphenylphosphit H₃PO₄: 85 %-ige Phosphorsäure BPDP: Bis (2,4-di-tert-butylphenyl)-pentaerythrit-diphosphit Poly-PPS: Polyphosphorsäure TPPat: Triphenylphosphat | | | | | |

### 2. Vergleichsbeispiele

2.1 Ein Veresterungsprodukt wird wie in Beispiel 1 in Gegenwart von 0,02 mmol Titantetrabutylat/mol TPA hergestellt und ohne weitere Zusätze 150 min wie in Beispiel 1 polykondensiert. Der erhaltene Polyester weist eine IV von 0,69 dl/g und mit einem b-Wert von 9,6 einen deutlichen Gelbstich auf.
2.2 Ein Veresterungsprodukt wie in Beispiel 1 und 2.1, das 0,02 mmol Titantetrabutylat/mol TPA enthält, wird mit 0,1 mmol Trisnonylphenylphosphit/mol TPA versetzt und wie in Beispiel 1 polykondensiert. Nach einer Polykondensationszeit von 150 min wurde eine intrinsische Viskosität von 0,55 dl/g erreicht.

### 3. Beispiel für einen kontinuierlichen Prozeß

Terephthalsäure (TPA) und Ethylenglykol (EG) werden in einem Pastenmischer im Molverhältnis 1:1,18 unter Zugabe von 0,02 mmol Titantetrabutylat/mol TPA gemischt, kontinuierlich in einen ersten Veresterungsreaktor eingespeist und intensiv mit der dort vorgelegten Monomerschmelze vermischt. Unter einem Druck von 2,5 bar (absolut) und einer Temperatur von 260°C wird die TPA mit EG verestert. Das Reaktionswasser wird über eine Destillationskolonne abgezogen, das teilweise mitverdampfte EG wird in die Monomerschmelze zurückgeführt. Die Schmelze gelangt in einen zweiten Reaktor, der in 3 Stufen unterteilt ist, die Temperatur wird stufenweise auf 270°C erhöht. In der ersten Stufe werden 0,07 mmol Polyphosphorsäure/mol TPA (berechnet auf den Phosphorgehalt) als Lösung in EG zugemischt. Überschüssiges EG verdampft und verläßt den Reaktor als Dampf. In die dritte Stufe des Reaktors wird bei einem Polykondensationsgrad der Schmelze von 4 bis 5 und einer Konzentration der Carboxylendgruppen von weniger als 150 mmol/kg eine Lösung von Kobaltacetat in EG eingespeist und vermischt. Die Lösung wird so dosiert, daß die Schmelze 0,1 mmol Cobalt pro mol TPA enthält. Nach Verlassen des zweiten Reaktors strömt die Schmelze in einen dritten Reaktor, wo bei 20 mbar und ca. 275°C weiteres EG abgetrieben wird und die Polykondensation fortschreitet. In dem folgenden Endreaktor vom Typ eines Horizontal-Ringscheibenreaktors wird bei 2 mbar und 280°C die Polykondensation vervollständigt. Die Schmelze wird kontinuierlich aus dem Endreaktor ausgetragen und granuliert. Das Produkt weist eine intrinsische Viskosität von 0,68 dl/g, einen Carboxylendgruppengehalt von 16 mmol/kg und einen Farbwert von b = - 0,5 auf.

### 4. Beispiel

2 1120 g (6,75 mol) Terephthalsäure werden mit 523 g (8,4 mol) Ethylenglykol zu einer Paste vermischt. Nach Zugabe von 66 mg Titantetrabutylat, gelöst in 11 g Ethylenglykol, wird die Paste unter Normaldruck bei 250°C zu einer Schmelze aus 600 g eines Veresterungsprodukts aus einem früheren Ansatz zugegeben. Die Schmelze befindet sich in einem über Doppelmantel mit einem flüssigen Wärmeträger beheizten Autoklaven. Die Zugabe der Paste erfolgt so langsam, daß die Beheizung eine konstante Temperatur in der Schmelze aufrecht erhalten kann.
   Das Reaktionswasser wird über eine Trenn-Kolonne abdestilliert. Nach Beendigung der Pastenzugabe wird die Temperatur allmählich bis auf 270°C erhöht. Nach 163 min ist die theoretische Wassermenge von 243 g abdestilliert. In einem Vergleichsansatz ohne Zugabe von Titantetrabutylat ist die Veresterung erst nach 220 min abgeschlossen.
   Nach Beendigung der Veresterung werden 288 g Trisnonylphenylphosphit zugegeben. Unter langsamem Anlegen von Vakuum wird mit der Vorkondensation begonnen. Bei Erreichen eines Drucks von 20 mbar werden 156 mg Kobaltacetat-Tetrahydrat, gelöst in 25 g Ethylenglykol, zu der Vorkondensatschmelze gegeben und vermischt und die Polykondensation 100 min lang bis zu einem Endvakuum von 2,7 mbar fortgeführt. Der hellfarbige Polyester weist eine IV von 0,675 und einen Carboxylendgruppengehalt von 17,9 mmol/kg auf.

### 5. Beispiel

Ein Veresterungsprodukt wird hergestellt wie in Beispiel 4, wobei das vorgelegte Veresterungsprodukt unter Zugabe von 288 mg (0,418 mmol) Trisnonylphenylphosphit aufgeschmolzen und mit der Paste, die 66 mg (0,2 mmol) Titantetrabutylat enthält, versetzt wird. Nach 160 min ist die Veresterung beendet und es werden 156 mg (0,63 mmol) Kobaltacetattetrahydrat als glykolische Lösung zugesetzt. Nach einer Polykondensationszeit von 110 min wird ein hellfarbiger Polyester mit einer IV von 0,683 dl/g und einem Carboxylendgruppengehalt von 16,5 mmol/kg erhalten.

## Patentansprüche

1. Verfahren zur Herstellung von hochmolekularem Polyethylenterephthalat (PET) oder Mischpolyestern davon, bei dem in einer ersten Stufe ein niedermolekulares Vorkondensat aus einer mehrbasischen Carbonsäure, z.B. Terephthalsäure, oder deren Alkylester mit einem oder mehreren mehrfunktionellen Alkoholen, z.B.Ethylenglykol, unter Verwendung eines Titankatalysators hergestellt wird, und daß in der zweiten Stufe einer Umsetzung zum hochmolekularen PET oder einem entsprechenden Copolyester erfolgt, wobei ein Inhibitor in Form einer phosphorhaltigen Verbindung zugesetzt wird,
dadurch **gekennzeichnet**,
daß bei der ersten Stufe eine Titanverbindung als Katalysator in einer Konzentration von 0,005 - 0,05 mmol pro mol Polycarbonsäure zugesetzt und die Umsetzung bis zu einem Umsatz von mindestens 95 %, gemessen am Grad der Wasserabspaltung, geführt wird, und daß die zweite Stufe der Polykondensation in Gegenwart der aus der ersten Stufe vorhandenen Titanverbindung unter Zusatz von kobalthaltigen Verbindungen in einer Konzentration von 0,02 - 0,2 mmol Kobalt pro mol Polycarbonsäure stattfindet, wobei der phosphorhaltige Inhibitor mit einer Konzentration von 0,004 - 0,4 mmol Phosphor pro mol Polycarbonsäure vor oder gleichzeitig mit der Zugabe des Kobaltkatalysators zugesetzt wird.

2. Verfahren nach Anspruch 1,
dadurch gekennzeichet, daß die Konzentration des Titankatalysators 0,01 bis 0,03 mmol pro mol Polycarbonsäure beträgt.

3. Verfahren nach Anspruch 1 oder 2,
dadurch gekennzeichnet, daß die Konzentration des phosphorhaltigen Inhibitors 0,01 bis 0,3 mmol pro mol Polycarbonsäure beträgt.

4. Verfahren nach mindestens einem der Ansprüche 1 oder 2,
dadurch gekennzeichnet, daß die Umsetzung in der ersten Stufe bis zu einem Umsatz von 85 % geführt wird.

5. Verfahren nach mindestens einem der Ansprüche 1 bis 4,
dadurch gekennzeichnet, daß der phosphorhaltige Inhibitor zusammen mit der Titanverbindung in der ersten Stufe und die Kobaltverbindung in der zweiten Stufe zugegeben wird.

6. Verfahren nach mindestens einem der Ansprüche 1 bis 5,
dadurch gekennzeichnet, daß das molare Verhältnis von Kobalt zu Phosphor so eingestellt wird, daß es zwischen 0,5 und 5,0, vorzugsweise zwischen 0,7 und 2,0 liegt.

## Claims

1. Process for preparing high molecular weight polyethylene terephthalate (PET) or copolyesters thereof, in which, in a first stage, a low molecular weight precondensate is prepared by reaction of a polybasic carboxylic acid, e.g. terephthalic acid, or an alkyl ester thereof with one or more polyfunctional alcohols, e.g. ethylene glycol, using a titanium catalyst and, in the second stage, a reaction to form the high molecular weight PET or a corresponding copolyester is carried out, with an inhibitor in the form of a phosphorus-containing compound being added, characterized in that, in the first stage, a titanium compound is added as catalyst in a concentration of 0.005 - 0.05 mmol per mol of polycarboxylic acid and the reaction is continued to a conversion of at least 95%, measured by the degree of water elimination, and in that the second stage of the polycondensation takes place in the presence of the titanium compound present from the first stage with addition of cobalt-containing compounds in a concentration of 0.02 - 0.2 mmol of cobalt per mol of polycarboxylic acid, where the phosphorus-containing inhibitor is added in a concentration of 0.004 - 0.4 mmol of phosphorus per mol of polycarboxylic acid prior to or at the same time as the addition of the cobalt catalyst.

2. Process according to Claim 1, characterized in that the concentration of the titanium catalyst is from 0.01 to 0.03 mmol per mol of polycarboxylic acid.

3. Process according to Claim 1 or 2, characterized in that the concentration of the phosphorus-containing inhibitor is from 0.01 to 0.3 mmol per mol of polycarboxylic acid.

4. Process according to at least one of Claims 1 and 2, characterized in that the reaction in the first stage is continued to a conversion of 85%.

5. Process according to at least one of Claims 1 to 4, characterized in that the phosphorus-containing inhibitor is added together with the titanium compound in the first stage and the cobalt compound is added in the second stage.

6. Process according to at least one of Claims 1 to 5, characterized in that the molar ratio of cobalt to phosphorus is set so as to be in the range from 0.5 to 5.0, preferably from 0.7 to 2.0.

## Revendications

1. Procédé pour la préparation d'un polyéthylène-téréphthalate de haut poids moléculaire (PET) ou de polyesters mixtes obtenus à partir de celui-ci, dans lequel dans une première étape, on prépare un précondensat de bas poids moléculaire à partir d'un polyacide carboxylique, par exemple de l'acide téréphthalique ou un ester alkylique de celui-ci avec un ou plusieurs alcools polyfonctionalisés, par exemple de l'éthylèneglycol, en présence d'un catalyseur à base de titane, et dans une deuxième étape a lieu la transformation de celui-ci en un PET de haut poids moléculaire ou en copolyester correspondant, un inhibiteur étant ajouté sous la forme d'un composé phosphoré,
caractérisé en ce qu'à la première étape on ajoute un composé à base de titane en tant que catalyseur en une concentration allant de 0,005 à 0,05 mmoles par mole de polyacide carboxylique et la transformation est poursuivie jusqu'à un degré de conversion de 95%, calculé sur la base du degré d'élimination d'eau, et en ce que la deuxième étape de la polycondensation a lieu en présence du composé à base de titane provenant de la première étape par addition d'un composé contenant du cobalt en une concentration de 0,02 à 0,2 mmoles de cobalt par mole de polyacide carboxylique, l'inhibiteur phosphoré étant ajouté avant ou en même temps que le catalyseur à base de cobalt en une concentration de 0,004 à 0,4 mmoles de phosphore par mole de polyacide carboxylique.

2. Procédé selon la revendication 1, caractérisé en ce que la concentration du catalyseur à base de titane est comprise entre 0,01 et 0,03 mmoles par mole de polyacide carboxylique.

3. Procédé selon la revendication 1 ou la revendication 2, caractérisé en ce que la concentration de l'inhibiteur phosphoré est comprise entre 0,01 et 0,3 mmoles par mole de polyacide carboxylique.

4. Procédé selon l'une quelconque des revendications 1 ou 2, caractérisé en ce que la transformation est poursuivie pendant la première étape jusqu'à un degré de conversion de 85%.

5. Procédé selon l'une quelconque des revendications 1 à 4, caractérisé en ce que l'inhibiteur phosphoré est ajouté en même temps que le composé à base de titane à la première étape et que le composé à base de cobalt à la deuxième étape.

6. Procédé selon l'une quelconque des revendications 1 à 5, caractérisé en ce que le rapport molaire du cobalt au phosphore est ajusté de telle sorte qu'il soit compris entre 0,5 et 5,0, de préférence entre 0,7 et 2,0.
